# EUROPÄISCHE PATENTSCHRIFT

(11) **EP 0 801 691 B1**
(45) Veröffentlichungstag und Bekanntmachung des Hinweises auf die Patenterteilung: **14.04.1999**
(21) Anmeldenummer: 96933252.7
(22) Anmeldetag: 04.10.1996
(51) Int. Cl.: C23C 24/10, C23C 4/12, B29C 45/60, B29C 47/60

(54) **VERFAHREN ZUR HERSTELLUNG VON VERSCHLEISS- UND KORROSIONSGESCHÜTZTEN OBERFLÄCHEN AUF PLASTIFIZIERSCHNECKEN FÜR SPRITZGIESSMASCHINEN**
PROCESS FOR MANUFACTURING WEAR- AND CORROSION-PROTECTED SURFACES ON PLASTIFIER SCREWS FOR INJECTION MOULDING MACHINES
PROCEDE DE PRODUCTION DE SURFACES ANTI-USURE ET ANTI-CORROSION SUR DES VIS DE PLASTIFICATION POUR PRESSES D'INJECTION

(30) Priorität: 04.10.1995 AT 1640/95
(43) Veröffentlichungstag der Anmeldung: 22.10.1997
(73) Patentinhaber: Engel Maschinenbau Gesellschaft m.b.H., A-4311 Schwertberg (AT)
(72) Erfinder: URBANEK, Otto, A-4020 Linz (AT); BALDINGER, Peter, A-4470 Enns (AT); Ebner, Reinhold, A-8793 Trofaiach (AT); Pitscheneder, Walther, A-8770 St.Michael (AT); Brandstätter, Elmar, A-8700 Leoben (AT)
(74) Vertreter: Torggler, Paul Norbert
(86) Internationale Anmeldenummer: AT9600185
(87) Internationale Veröffentlichungsnummer: WO9713004

(56) Entgegenhaltungen:
- EP-A- 0 498 286
- DE-A- 3 740 916
- DE-A- 4 130 207
- DE-A- 4 233 516
- US-A- 5 135 378
- PLASTVERARBEITER, Bd. 46, Nr. 6, Juni 1995, HEIDELBERG,DE, Seiten 21-25, XP000522412 S. WOLF: "verschleiss-und korrosionsschutz durch laserbeschichten"
- PATENT ABSTRACTS OF JAPAN vol. 16, no. 169 (M-1239), 23.April 1992 & JP,A,04 014410 (KOBE STEEL), 20.Januar 1992,

## Beschreibung

Die Erfindung bezieht sich auf ein Verfahren zur Herstellung von verschleiß- und korrosionsgeschützten Oberflächen auf Plastifizierschnecken für Spritzgießmaschinen, wobei auf der gesamten Oberfläche einer Plastifizierschnecke verschleißfeste Schichten in zwei Verfahrensschritten hergestellt werden.

Um die Verschleißfestigkeit von Plastifizierschnecken zu verbessern, werden nach dem herkömmlichen Stand der Technik die Plastifizierschnecken gehärtet oder mittels Flammspritzen mit nachträglicher Wämebehandlung beschichtet. Beides kann zu einer Verformung der Schnecke führen, wobei beim Flammspritzen beim anschließenden Richten der Plastifizierschnecke Risse in der Beschichtung auftreten können. Eine derartige Plastifizierschnecke ist daher nicht korrosionsfest.

Aufgabe der Erfindung ist es, ein verbessertes Verfahren zum Beschichten von Plastifizierschnecken zu schaffen, mittels dem eine förderwirksame verschleiß- und korrosionsbeständige Beschichtung auf der Oberfläche der Plastifizierschnecke erzielt werden kann.

Die erfindungsgemäße Aufgabe wird dadurch gelöst, daß in die Stegoberseite des Schneckensteges mittels Lasertechnik Zusatzwerkstoffe eingeschmolzen werden und die Stegflanken und der Schneckengrund mittels Hochgeschwindigkeitsflammspritzen mit metallischen, hartmetallischen und/oder keramischen Werkstoffen beschichtet werden.

Bei dem erfindungsgemäßen Verfahren kommt es zu keinem Verziehen des Schneckengrundkörpers nach dem Hochgeschwindigkeitsflammsphtzprozeß, wodurch Risse in der Beschichtung vermieden werden.

Vorteilhaft ist vorgesehen, daß auf einem zylindrischen Stahlgrundkörper schraubenförmig in die Stegoberseite eines Schneckensteges mittels eines Laserstrahles Zusatzwerkstoffe eingeschmolzen werden, daß danach die Schneckengeometrie mechanisch gefertigt wird und daß anschließend die Stegflanken und der Schneckengrund mittels Hochgeschwindigkeitsflammspritzen beschichtet werden.

Nachfolgend wird ein Ausführungsbeispiel der Erfindung anhand der Figuren der beiliegenden Zeichnung beschrieben.

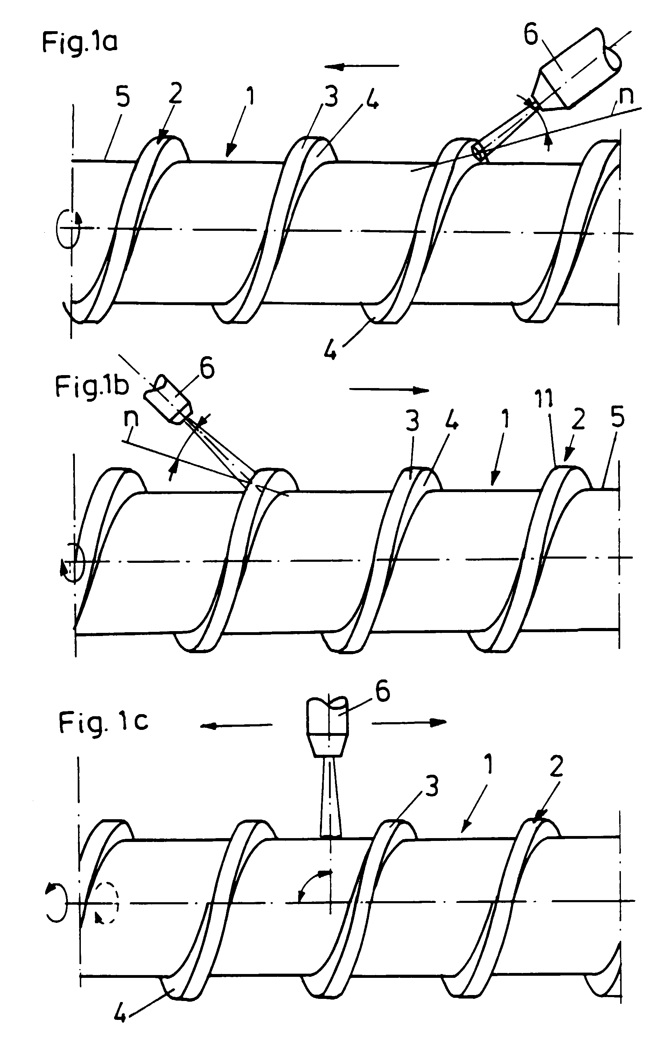

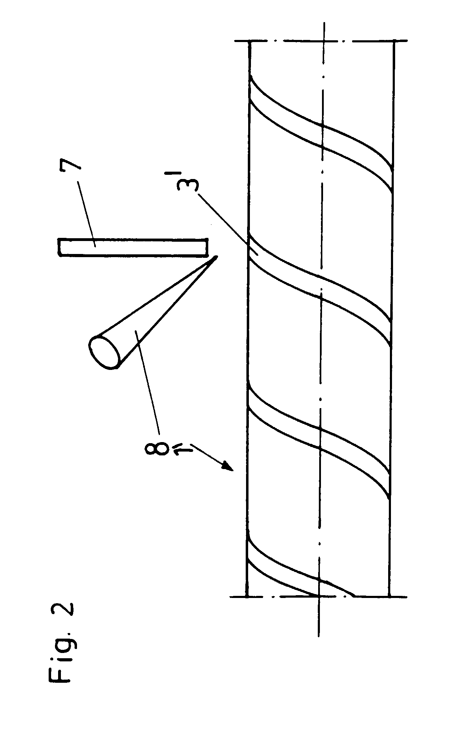

Die Fig. 1a bis 1c zeigen Ausschnitte des Schneckengrundkörpers in verschiedenen Stadien der Bearbeitung und die Fig. 2 zeigt einen Ausschnitt des zylindrischen Rohlings, aus dem die Schnecke gearbeitet wird.

Auf den Schneckenrohling 1' wird mittels einer Düse 7 ein Zusatzwerkstoff in den Bereich der Stegoberseite 3' schraubenförmig mittels eines Laserstrahles 8 eingeschmolzen.

Anschließend wird die Schneckengeometrie mechanisch gefertigt, wobei der Schneckengrund 5 und der Steg 2 aus dem Schneckenrohling 1' ausgeformt wird. Das Ausformen erfolgt vorzugsweise im spanabhebenden Verfahren, wie Fräsen, Drehen und Schleifen.

Nachdem der eigentliche Schneckengrundkörper 1 hergestellt wurde, werden die Stegflanken 4 und der Schneckengrund 5 mittels Hochgeschwindigkeitsflammspritzens beschichtet.

Die Beschichtung der Stegflanken 4 des Schneckengrundes 5 erfolgt mittels einer Brennerdüse 6, mittels der ein Spritzstrahl aus metallischen, hartmetallischem oder keramischem Werkstoff im Hochgeschwindigkeitsflammspritz-Verfahren aufgetragen wird.

Die Brennerdüse 6 wird mehrfach axial über dem Schneckengrundkörper 1 bewegt, wobei der Schneckengrundkörper 1 um seine Längsachse gedreht wird. Dabei entspricht der Vorschub der Brennerdüse 6 der Steigung des Schneckenganges. Die Brennerdüse 6 ist in einem Winkel Â von 0 - 60° zur Normalen n auf die Stegflanke 4 des Schneckensteges 2 ausgerichtet.

Bei jedem Umkehrpunkt wird die Brennerdüse 6 geschwenkt, um die gegenüberliegende Stegflanke 4 des Schneckensteges 2 zu besprühen, und ebenso wird bei jedem Umkehrpunkt die Drehrichtung des Schneckengrundkörpers 1 geändert.

Nach erfolgter Beschichtung der Stegflanken 4 wird der Schneckengrund 5 ebenfalls im Hochgeschwindigkeitsflammsprik-Verfahren beschichtet, wobei die Brennerdüse 6, wie in der Fig. 1c gezeigt ist, in einem Winkel von 90° zur Längs-Mittelachse des Schneckengrundkörpers ausgerichtet ist.

Es ist auch möglich, die Stegflanken 4 derart zu beschichten, daß die Brennerdüse 6 bei den Umkehrpunkten geschwenkt, die Drehrichtung des Schneckengrundkörpers 1 jedoch beibehalten wird.

Nach dem letzten Fertigungsschritt kann eine Wärmebehandlung zur Minimierung von Eigenspannungen in der Plastifizierschnecke erfolgen.

Vor dem Hochgeschwindigkeitsflammspritzen ist es vorteilhaft, wenn die zu bearbeitenden Oberflächen, d.h. die Stegflanken 4 und der Schneckengrund 5, in einem Ultraschallbad oder manuell mittels alkohlischen Lösungen gereinigt werden. Nach dem Reinigungsverfahren kann die laserbehandelte Stegoberseite 3 mittels Silikon abgedeckt werden und die unbehandelten Stahloberflächen werden einem Sandstrahlprozeß unterzogen. Bei diesem Prozeß wird eisenfreier Edelkorund in Kömungen von 0.3- 1.5 mm eingesetzt.

Durch das Hochgeschwindigkeitsflammspritzen der sandgestrahlen Bereiche wird ein mechanischer Schichtverbund zwischen dem Beschichtungsmaterial und dem Schneckengrundkörper 1 geschaffen. Es entsteht kein Schmelzverbund.

Es können auch zusätzlich zur laserbehandelten Stegoberseite 3 Teilbereiche der Schneckenoberfläche, beispielsweise die Stegflanken 4 oder der Schneckengrund 5, vor der Beschichtung mittels Hochgeschwindigkeitsflammspritzen mit Silikon abgedeckt werden.

Um die Oberfläche der Plastifizierschnecke zu verbessern, können die durch Hochgeschwindigkeitsflammspritzen beschichteten Bereiche mittels flexiblen Diamantwerkzeugen und die laserbeschichtete Stegoberseite 3 mit Diamant-, CBN-, Sic- oder Korundschleifscheiben bearbeitet werden.

Der Schneckengrundkörper 1 der Plastifizierschnecke besteht aus Stahlwerkstoff, vorzugsweise aus den Qualitäten 1.7225, 1.2316, 1.8550, 1.8519 und 1.2365.

Als Zusatzwerkstoffe für die Laserbehandlung werden Metalle, Hartmetalle und/oder Keramiken in Pulver-, Draht-, Paste- oder Bandform eingesetzt.

Als Zusatzwerkstoffe für die Laserbehandlung werden Mo, Ti, Cr, Ni, Co, Nb, V, W, Al, Mg, Ta, Zr, Si, Fe, Mn, Hf, C, B, N, Ca und deren Karbide, Nitride, Boride, Karbonitride, Oxide, Karboboride, Silizide, Sulfide einzeln oder in Kombination eingesetzt.

Als Beschichtungswerkstoffe für das Hochgeschwindigkeitsflammspritzen werden folgende Werkstoffe einzeln oder in Kombination eingesetzt: Mo, Cr, Ni, Ti, Al, Co, Nb, Co-Ni, Co-Cr, Cr-Ni, Co-Mo-Cr, CrC-NiCr, WC-CrC-Ni, WC-Ni, TiC-CrNi, VC-CrNi, WC-VC-Ni, AlO-ZrO, AlO-TiO, ZrO-MgO und CrO.

## Patentansprüche

1. Verfahren zur Herstellung von verschleiß- und korrosionsgeschützten Oberflächen auf Plastifizierschnecken für Spritzgießmaschinen, wobei auf der gesamten Oberfläche einer Plastifizierschnecke verschleißfeste Schichten in zwei Verfahrensschritten hergestellt werden, dadurch gekennzeichnet, daß in die Stegoberseite (3) des Schneckensteges (2) mittels Lasertechnik Zusatzwerkstoffe eingeschmolzen werden und die Stegflanken (4) und der Schneckengrund (5) mittels Hochgeschwindigkeitsflammspritzen mit metallischen, hartmetallischen und/oder keramischen Werkstoffen beschichtet werden.

2. Verfahren nach Anspruch 1, dadurch gekennzeichnet, daß auf einen zylindrischen Stahlgrundkörper (1') schraubenförmig in die Stegoberseite (3) der Schneckenstege (2) Zusatzwerkstoffe durch Einsatz mindestens eines Laserstrahles eingeschmolzen werden, daß danach die Schneckengeometrie des Schneckengrundkörpers (1) mechanisch gefertigt wird und daß anschließend die Stegflanken (4) und der Schneckengrund (5) mittels Hochgeschwindigkeitsflammspritzen beschichtet werden.

3. Verfahren nach Anspruch 2, dadurch gekennzeichnet, daß die Stegflanken (4) und der Schneckengrund (5) in separaten Arbeitsgängen beschichtet werden.

4. Verfahren nach einem der Ansprüche 1 bis 3, dadurch gekennzeichnet, daß mittels mindestens eines Laserstrahles ein zugeführter und/oder vordeponierter Zusatzwerkstoff in einen vorzugsweise zylindrischen Grundkörper in die Bereiche der Stegoberseiten eingeschmolzen wird.

5. Verfahren nach Anspruch 4, dadurch gekennzeichnet, daß die Bereiche der Stegoberseiten an einem zylindrischen Stahlgrundkörper (1') in Form einer helixförmigen Nut mechanisch vorgefertigt werden.

6. Verfahren nach Anspruch 4, dadurch gekennzeichnet, daß das Aufschmelzen in einer künstlichen Atmosphäre erfolgt.

7. Verfahren nach Anspruch 2, dadurch gekennzeichnet, daß nach dem letzten mechanischen Fertigungsschritt eine Wärmebehandlung zur Minimierung von Eigenspannungen in der Plastifizierschnecke erfolgt.

8. Verfahren nach einem der Ansprüche 1 bis 7, dadurch gekennzeichnet, daß die bearbeitete Oberfläche des Schneckengrundkörpers (1) in einem Ultraschallbad oder manuell mittels alkoholischer Lösungen gereinigt wird.

9. Verfahren nach einem der Ansprüche 1 bis 8, dadurch gekennzeichnet, daß nach dem Reinigungsverfahren der laserbehandelte Bereich vorzugsweise mittels Silikon abgedeckt wird und die unbehandelte Stahloberfläche einem Sandstrahlprozeß unterzogen wird, wobei eisenfreier Edelkorund in Kömungen von 0.3 - 1.5 mm eingesetzt wird.

10. Verfahren nach Anspruch 9, dadurch gekennzeichnet, daß die sandgestrahlten Bereiche durch Hochgeschwindigkeitsflammspritzen beschichtet werden, sodaß ein mechanischer Schichtverbund entsteht.

11. Verfahren nach einem der Ansprüche 1 bis 10, dadurch gekennzeichnet, daß zusätzlich zum laserbehandelten Bereich Teilbereiche der Schneckenoberfläche vor dem Hochgeschwindigkeitsflammspritzen, vorzugsweise mit Silikon abgedeckt werden.

12. Verfahren nach einem der Ansprüche 1 bis 11, dadurch gekennzeichnet, daß der durch Hochgeschwindigkeitsflammspritzen beschichtete Bereich mit flexiblen Diamantwerkzeugen und der laserbehandelte Bereich mit Diamant-, CBN- oder Korundschleifscheiben bearbeitet wird.

13. Verfahren nach einem der Ansprüche 1 bis 12, dadurch gekennzeichnet, daß der Schneckengrundkörper (1) aus einem Stahlwerkstoff gefertigt wird, vorzugsweise aus den Qualitäten 1.4122, 1.7225, 1.2316, 1.8550, 1.8519 und 1.2365.

14. Verfahren nach einem der Ansprüche 1 bis 13, dadurch gekennzeichnet, daß als Zusatzwerkstoffe für die Laserbehandlung Metall, Hartmetalle und/oder Keramiken in Pulver-, Draht-, Paste- oder Bandform eingesetzt werden.

15. Verfahren nach einem der Ansprüche 1 bis 14, dadurch gekennzeichnet, daß als Zusatzwerkstoffe für die Laserbehandlung Mo, Ti, Cr, Ni, Co, Nb, V, W, Al, Mg, Ta, Zr, Si, Hf, Fe, Mn, Ca, B, C, N und deren Karbide, Nitride, Boride, Karbonitride, Oxide, Carboboride, Sulfide, Silizide einzeln oder in Kombination eingesetzt werden.

16. Verfahren nach einem der Ansprüche 1 bis 14, dadurch gekennzeichnet, daß Substanzen, welche Schwefel, Tellur, Sauerstoff und/oder Selen enthalten, den Bereichen der Stegoberseiten während des Einschmelzprozesses zugeführt werden.

17. Verfahren nach Anspruch 1, dadurch gekennzeichnet, daß als Hochgeschwindigkeitsflammspritzen Beschichtungswerkstoffe Mo, Cr, Ni, Ti, Al, Co, Nb, Co-Ni, Co-Cr, Cr-Ni, Co-Mo-Cr, CrC-NiCr, WC-CrC-Ni, WC-Ni, TiC-CrNi, VC-CrNi, WC-VC-Ni, AlO-ZrO, AlO-TiO, ZrO-MgO und CrO einzeln oder in Kombination eingesetzt werden.

## Claims

1. A process for producing wear-protected and corrosion-protected surfaces on plasticizing screws for injection molding machines, wherein wear-resistant layers are produced in two process steps on the entire surface of a plasticizing screw, characterised in that additives substances are fused into the top side (3) of the screw flight (2) by means of laser technology and the flight flanks (4) and the screw bottom (5) are coated by means of high-speed flame spraying with metal, carbide-metal and/or ceramic materials.

2. A process as set forth in claim 1 characterised in that additive substances are fused on to a cylindrical steel main body (1') in a helical configuration into the top side (3) of the screw flights (2) by using at least one laser beam, that thereafter the screw geometry of the screw main body (1) is mechanically finished and that then the flight flanks (4) and the screw bottom (5) are coated by means of high-speed flame spraying.

3. A process as set forth in claim 2 characterised in that the flight flanks (4) and the screw bottom (5) are coated in separate working operations.

4. A process as set forth in one of claims 1 through 3 characterised in that a supplied and/or previously deposited additive substance is fused by means of at least one laser beam into a preferably cylindrical main body into the regions of the flight top sides.

5. A process as set forth in claim 4 characterised in that the regions of the flight top sides are mechanically pre-fabricated on a cylindrical steel main body (1') in the form of a helical groove.

6. A process as set forth in claim 4 characterised in that the fusing-on operation is effected in an artificial atmosphere.

7. A process as set forth in claim 2 characterised in that after the last mechanical production step a heat treatment is effected to minimize inherent stresses in the plasticizing screw.

8. A process as set forth in one of claims 1 through 7 characterised in that the worked surface of the screw main body (1) is cleaned in an ultrasonic bath or manually by means of alcohol solutions.

9. A process as set forth in one of claims 1 through 8 characterised in that after the cleaning procedure the laser-treated region is covered preferably by means of silicone and the untreated steel surface is subjected to a sand blasting procedure, using iron-free electro-corundum in grain sizes of 0.3 - 1.5 mm.

10. A process as set forth in claim 9 characterised in that the sand-blasted regions are coated by high-speed flame spraying so as to produce a mechanical laminate bond.

11. A process as set forth in one of claims 1 through 10 characterised in that in addition to the laser-treated region portions of the screw surface are covered preferably with silicone, prior to the high-speed flame spraying operation.

12. A process as set forth in one of claims 1 through 11 characterised in that the region coated by high-speed flame spraying is worked with flexible diamond tools and the laser-treated region is worked with diamond, CBN or corundum grinding wheels.

13. A process as set forth in one of claims 1 through 12 characterised in that the screw main body (1) is made from a steel material, preferably of the qualities 1.4122, 1.7225, 1.2316, 1.8550, 1.8519 and 1.2365.

14. A process as set forth in one of claims 1 through 13 characterised in that metal, carbide-metals and/or ceramics in powder, wire, paste or strip form are used as additive substances for the laser treatment.

15. A process as set forth in one of claims 1 through 14 characterised in that Mo, Ti, Cr, Ni, Co, Nb, V, W, Al, Mg, Ta, Zr, Si, Hf, Fe, Mn, Ca, B, C and N and their carbides, nitrides, borides, carbonitrides, oxides, carboborides, sulfides and silicides are used individually or in combination as additive substances for the laser treatment.

16. A process as set forth in one of claims 1 through 14 characterised in that substances which contain sulfur, tellurium, oxygen and/or selenium are fed to the regions of the flight top sides during the fusing-in procedure.

17. A process as set forth in claim 1 characterised in that Mo, Cr, Ni, Ti, Al, Co, Nb, Co-Ni, Co-Cr, Cr-Ni, Co-Mo-Cr, CrC-NiCr, WC-CrC-Ni, WC-Ni, TiC-CrNi, VC-CrNi, WC-VC-Ni, AlO-ZrO, AlO-TiO, ZrO-MgO and CrO are used individually or in combination as high-speed flame spray coating substances.

## Revendications

1. Procédé de production de surfaces anti-usure et anticorrosion sur des vis de plastification pour presses d'injection, dans lequel on dépose sur l'ensemble de la surface d'une vis de plastification des couches anti-usure en deux étapes, caractérisé en ce que, l'on fait fondre des additifs au moyen de la technique laser dans la partie supérieure (3) de la crête de la vis (2) et l'on recouvre les flancs du filet (4) et le fond de la vis (5) au moyen de métallisation au pistolet à grande vitesse avec des matières métalliques, des matières en métal dur et/ou céramiques.

2. Procédé selon la revendication 1, caractérisé en ce que l'on fait fondre sur un substrat cylindrique en acier (1') en forme de vis dans la partie supérieure (3) de la crête de la vis (2) des additifs en utilisant au moins un faisceau laser, en ce qu'on finit ensuite mécaniquement la géométrie de la vis du substrat de vis (1) et en ce qu'on recouvre ensuite les flancs du filet (4) et le fond de la vis (5) au moyen de métallisation au pistolet à grande vitesse.

3. Procédé selon la revendication 2, caractérisé en ce que les flancs du filet (4) et le fond de la vis (5) sont recouverts dans des étapes de traitement séparées.

4. Procédé selon l'une des revendications 1 à 3, caractérisé en ce que l'on fait fondre au moyen d'au moins un faisceau laser un additif externe et/ou prédéposé sur un substrat de préférence cylindrique dans les zones des parties supérieures de filet.

5. Procédé selon la revendication 4, caractérisé en ce que les zones des parties supérieures du filet sont préfabriquées mécaniquement sur un substrat d'acier (1') cylindrique sous forme d'une rainure en forme d'hélice.

6. Procédé selon la revendication 4, caractérisé en ce que la refusion est réalisée sous une atmosphère artificielle.

7. Procédé selon la revendication 2, caractérisé en ce que l'on réalise après la dernière étape de fabrication mécanique un traitement thermique pour minimiser les tensions internes dans la vis de plastification.

8. Procédé selon l'une des revendications 1 à 7, caractérisé en ce que la surface usinée du substrat de la vis (1) est nettoyée manuellement ou dans un bain d'ultrasons au moyen de solution alcooliques.

9. Procédé selon l'une des revendications 1 à 8, caractérisé en ce qu'après le procédé de nettoyage, on recouvre la zone traitée au laser de préférence au moyen de silicone et en ce qu'on traite par un procédé de sablage la surface d'acier non traitée, en utilisant du corindon raffiné non ferrugineux en grains de 0,3 - 1,5 mm.

10. Procédé selon la revendication 9, caractérisé en ce que les zones sablées sont recouvertes par métallisation au pistolet à grande vitesse, de sorte qu'il en résulte une adhérence mécanique de la couche.

11. Procédé selon l'une des revendications 1 à 10, caractérisé en ce qu'en plus de la zone traitée au laser, des zones partielles de la surface de la vis sont recouvertes avant la métallisation au pistolet à grande vitesse, de préférence avec du silicone.

12. Procédé selon l'une des revendications 1 à 11, caractérisé en ce que l'on usine la zone recouverte par métallisation au pistolet à grande vitesse avec des outils diamantés flexibles et la zone traitée au laser avec des meules diamant, CBN ou corindon.

13. Procédé selon l'une des revendications 1 à 12, caractérisé en ce que le substrat de la vis (1) est fabriqué en une matière en acier, de préférence des qualités 1.4122, 1.7225, 1.2316, 1.8550, 1.8519 et 1.2365.

14. Procédé selon l'une des revendications 1 à 13, caractérisé en ce qu'on utilise comme additifs pour le traitement au laser du métal, des métaux durs et/ou des céramiques sous forme de poudre, de fil, de pâte ou de bande.

15. Procédé selon l'une des revendications 1 à 14, caractérisé en ce qu'on utilise comme additif pour le traitement laser Mo, Ti, Cr, Ni, Co, Nb, V, W, Al, Mg, Ta, Zr, Si, Hf, Fe, Mn, Ca, B, C, N et leurs carbures, nitrures, borures, carbonitrures, oxydes, carboborures, sulfures, siliciures seuls ou en combinaison.

16. Procédé selon l'une des revendications 1 à 14, caractérisé en ce qu'on ajoute pendant l'opération de refusion dans les zones des parties supérieures de la crête de vis, des substances qui contiennent du soufre, du tellure de l'azote et/ou du sélénium.

17. Procédé selon la revendication 1, caractérisé en ce qu'on utilise comme matière de revêtement Mo, Cr, Ni, Ti, Al, Co, Nb, Co-Ni, Co-Cr, Cr-Ni, Co-Mo-Cr, CrC-NiCr, WC-CrC-Ni, WC-Ni, TiC-CrNi, VC-CrNi, WC-VC-Ni, AlO-ZrO, AlO-TiO, ZrO-MgO et CrO seuls ou en mélanges.
